# FASCICULE DE BREVET EUROPEEN

(11) **EP 0 876 532 B1**
(45) Date de publication et mention de la délivrance du brevet: **24.04.2002**
(21) Numéro de dépôt: 96943838.1
(22) Date de dépôt: 24.12.1996
(51) Int. Cl.: D06N 5/00, E04D 5/02, B32B 5/26

(54) **PROCEDE DE FABRICATION D'UNE MEMBRANE D'ETANCHEITE ET D'UN REVETEMENT DE TOITURE ET PRODUITS OBTENUS**
VERFAHREN ZUR HERSTELLUNG EINER DICHTUNGSBAHN UND EINER DACHDECKUNG SOWIE DARAUS ENTSTEHENDE PRODUKTE
METHOD FOR MANUFACTURE OF AN IMPERMEABLE MEMBRANE AND A ROOF COVERING AND PRODUCTS OBTAINED BY THE METHOD

(30) Priorité: 27.12.1995 BE 9501072; 23.02.1996 WO PCT/BE96/00020
(43) Date de publication de la demande: 11.11.1998
(73) Titulaire: PERFORMANCE ROOF SYSTEMS S.A., 1360 Perwez (BE)
(72) Inventeur: COGNEAU, Patrick, B-1457 Tourinnes-Saint-Lambert (BE)
(74) Mandataire: Quintelier, Claude
(86) Numéro de dépôt international: BE9600137
(87) Numéro de publication internationale: WO9724485

(56) Documents cités:
- EP-A- 0 159 514
- EP-A- 0 387 511
- EP-A- 0 442 370
- EP-A- 0 666 349
- WO-A-95/12022
- DE-A- 3 503 809
- FR-A- 2 352 929
- US-A- 4 291 086

## Description

La présente invention se rapporte à un procédé de fabrication d'une membrane d'étanchéité suivant lequel on applique, sur une face d'une structure comprenant au moins une nappe de fibres, une masse bitumineuse.

Une membrane, destinée à être appliquée sur un toit et obtenue par application d'un tel procédé est connu du brevet australien n° AU-B-499.990. La membrane connue contient une masse bitumineuse dans laquelle des matières retardataires de flammes et/ou anti-feu ont été incorporées.

Due à leur application, la masse bitumineuse dans les membranes connues est exposée à des températures variables et plus particulièrement à des rayons ultraviolets. Ceci a pour conséquence que les membranes souffrent de problèmes d'exsudation qui à la longue mènent à un faïençage de la surface de la membrane. Les problèmes d'exsudation propre à l'ensemble des membranes bitumineuses modifient non seulement l'esthétique mais peuvent également entraîner des problèmes d'attaque, en particulier dus à l'oxydoréduction, de métaux non-ferreux comme par exemple le cuivre, le zinc et le plomb, qui sont utilisés au niveau de la toiture pour la décharge pluviale.

Le but de l'invention est de réaliser un procédé de fabrication d'une membrane d'étanchéité qui permet d'obtenir une membrane d'étanchéité nettement moins sensible aux problèmes d'exsudation.

A cette fin, le procédé suivant l'invention est caractérisé en ce que la masse bitumineuse est appliquée après qu'ait été appliqué sur l'autre face et en surface de ladite structure une substance pâteuse ayant une viscosité à 25°C et à cisaillement nul d'au moins 10.000 Cps et qui comprend 20 à 70 % en poids humide d'un composé à base d'acrylique ou à base d'acétate de polyvinyle et une charge minérale ou organique. Le composé à base d'acrylique ou à base d'acétate de polyvinyle appliqué sur l'autre face de la structure forme un film continu qui protège la masse bitumineuse appliquée sur l'une face de la structure et permet ainsi de former une barrière anti-exsudation pratiquement imperméable.

Une structure placée sur un panneau isolant, sur laquelle une couche de revêtement comprenant une substance à base d'un composé à base d'acrylique ou à base d'acétate de polyvinyle a été appliquée, est connue du brevet EPS 0 159 514. Le panneau isolant comprenant la structure peut être utilisée comme élément de toiture, et résiste à de hautes températures. Grâce à cette résistance, on peut y appliquer du bitume. Le panneau isolant comprenant la structure et le bitume qui y est appliqué suivant le brevet EPS 0 159 514 ne forme toutefois pas de membrane. De plus, étant donné que le bitume est appliqué sur la couche anti-exsudation même, cette dernière ne forme plus de barrière aux rayons ultra-violets. La structure suivant ce brevet n'apporte pas de solution au problème de l'exsudation. Enfin, la composition de la substance diffère de celle selon l'invention.

Selon un premier mode de réalisation, le procédé de fabrication d'une membrane d'étanchéité suivant l'invention est caractérisé en ce qu'on utilise comme charge minérale ou organique une charge retardataire de flamme. Ainsi, la substance présente des caractéristiques de résistance au feu.

Selon un deuxième mode de réalisation, le procédé de fabrication d'une membrane d'étanchéité suivant l'invention est caractérisé par une première étape dans laquelle ladite substance est appliquée sur une première nappe de fibres faisant partie de la structure et ensuite séchée, une deuxième étape dans laquelle ladite masse bitumineuse est appliquée sur la première nappe de fibres, et par une troisième étape dans laquelle une deuxième nappe de fibres, faisant également partie de la structure, est appliquée sur la masse bitumineuse appliquée sur la première nappe de fibres. Ce procédé s'intègre aisément aux procédés classiques de fabrication de membranes d'étanchéité.

Selon un troisième mode de réalisation, le procédé de fabrication d'une membrane d'étanchéité suivant l'invention est caractérisé en ce qu'on utilise un voile de verre en tant que première nappe de fibres et un non-tissé polyester en tant que deuxième nappe de fibres. Le voile de verre se lie bien à la substance et le non-tissé polyester se lie bien à la masse bitumineuse.

L'invention se rapporte également à une membrane d'étanchéité comprenant une masse bitumineuse, appliquée sur une face d'une structure comportant une nappe de fibres, caractérisée en ce que l'autre face de la structure est recouverte en surface de la structure d'une substance qui résulte de l'application selon le procédé de l'invention d'une charge minérale ou organique ainsi que 20 à 70 %, en poids humide, d'un latex polyacrylique ou d'un latex copolymère de styrène acrylique, lequel latex comporte 40 à 60 % de matière solide ce qui représente en poids sec par rapport au poids humide 8 (20 % de 40 %) à 42 % (70 % de 60 %).

En outre, l'invention concerne également un revêtement souple destiné à une toiture recouverte d'une masse bitumineuse, lequel revêtement comprend une structure qui comporte au moins une nappe de fibres, caractérisé en ce que la structure est recouverte en surface d'une substance telle que définie ci-dessus et qui comporte des chaînes aliphatiques de longueur inférieure à 10 atomes de carbone.

Enfin, l'invention concerne l'utilisation, en tant que revêtement de toiture sur une masse bitumineuse, d'une nappe de fibres, sur laquelle a été appliquée une substance qui résulte de l'application selon le procédé de l'invention comprenant une charge minérale ou organique ainsi que 8 à 42 %, en poids sec d'un latex polyacrylique ou d'un latex copolymère de styrène acrylique, la substance se trouvant en surface de la structure du côté opposé au côté en contact avec la masse bitumineuse.

Dans ce qui suit, l'invention sera décrite plus en détail à l'aide des dessins annexés.

La figure 1 illustre schématiquement un premier exemple de réalisation des deuxième et troisième étapes du procédé de fabrication d'une membrane d'étanchéité selon l'invention.

La figure 2 illustre schématiquement un deuxième exemple de réalisation des deuxième et troisième étapes du procédé de fabrication d'une membrane d'étanchéité selon l'invention.

La figure 3 illustre, à échelle agrandie, une vue en coupe à travers une membrane d'étanchéité obtenue par l'application du procédé illustré à la figure 1 ou 2.

Le procédé de fabrication de la membrane d'étanchéité suivant l'invention comprend trois étapes. La première étape comprend le procédé de fabrication du revêtement de toiture, suivant lequel une substance pâteuse, ayant une viscosité à 25°C et à cisaillement nul d'au moins 10.000 cps et qui comprend 20 à 70% en poids humide d'un composé à base d'acrylique ou à base d'acétate de polyvinyle et une charge minérale ou organique, est appliquée sur une première nappe de fibres et forme un film. Après l'application de ladite substance sur la première nappe de fibres, le revêtement ainsi obtenu est séché. Le revêtement est ensuite bobiné, mais il peut également, après séchage, être conduit vers les étapes ultérieures.

Le composé à base d'acrylique est par exemple un latex polyacrylique ou un latex copolymère de styrène acrylique (40 à 60% de matières solides) et comporte de préférence des chaînes latérales aliphatiques assez "courtes", de longueur inférieure à 10 atomes de carbones. En effet, plus les chaînes latérales sont longues, plus la transition vitreuse T_{g} est basse et plus le produit est souple. Toutefois, si la transition vitreuse T_{g} est trop basse, des problèmes d'exsudation apparaîtront. Il faut donc chercher un compromis entre la souplesse du produit et ses caractéristiques d'anti-exsudation. Il est apparu que les composés à base d'acrylique ou à base d'acétate de polyvinyle comportant des chaînes latérales aliphatiques assez "courtes", de longueur inférieure à 10 atomes de carbones répondent à ce compromis.

Le composé à base d'acétate de polyvinyle est par exemple un latex acétate de polyvinyle pur ou modifié par un ester d'acide gras comme par exemple un ester Versatic® (marque déposée par Shell) ou un ester Versatic® acrylique. La transition vitreuse T_{g} de ces polymères doivent se situer dans la même zone de valeur que les composés acryliques.

De préférence, la substance est une pâte aqueuse qui comprend les matières suivantes :

| | % en poids humide |
|---|---|
| composé à base d'acrylique ou à | 25 - 50 |
| base d'acétate de polyvinyle coagulant | 2 - 5 |
| accélérateur de coagulation | 2 - 5 |
| anti-moussant | 0,02 - 0,04 |
| charge | 60 - 40 |
| pigment | 1 - 4 |
| épaississant | 0,2 - 0,6 |
| eau | 1 - 4 |

L'accélérateur de coagulation permet d'obtenir plus rapidement un film. Le pigment permet d'obtenir une substance ayant une couleur souhaitée. De préférence, on utilise des pigments contenant peu d'agent émulgateur. L'épaississant et l'eau permettent d'obtenir une substance plus visqueuse qui est plus facile à appliquer. L'anti-moussant permet d'éviter la formation de mousse qui peut se produire par le mélange des composants de la substance. En utilisant ces matières avec les quantités mentionnées, on obtient une substance dont la viscosité à 25°C et à cisaillement nul est supérieure à 10.000 cps. Ceci permet de facilement appliquer cette substance et d'obtenir un film étanche sur la structure.

Comme charge, tout type de charge minérale ou organique convient, mais de préférence, on utilise du carbonate de calcium (CaCO₃) ou une charge retardataire de flamme comme le trihydrate d'aluminium et les produits intumescents, permettant d'obtenir une substance qui répond par exemple aux normes anti-feu suivantes :

| charge utilisée | normes anti-feu |
|---|---|
| carbonate de calcium | Nordtest - Fire 006 (NFT006), DIN4102 partie 1 et 7 et Arrêté français du 10/9/70, Classe 4 dans BS476 partie 7 |
| trihydrate d'aluminium | idem, mais de façon plus nette, Classe 3 dans BS476 partie 7 |
| produits intumescents | idem, mais aussi Classe 2 et Classe 1 dans BS476 partie 7 |

Le carbonate de calcium n'est en principe pas une charge retardataire de flamme, mais puisqu'on l'utilise en grande quantité (40 à 60%) dans la substance, la substance ainsi obtenue répond néanmoins aux normes anti-feu NFT006 et DIN4102, classe 4. Comme produit retardataire de flamme, on peut également utiliser un produit halogéné.

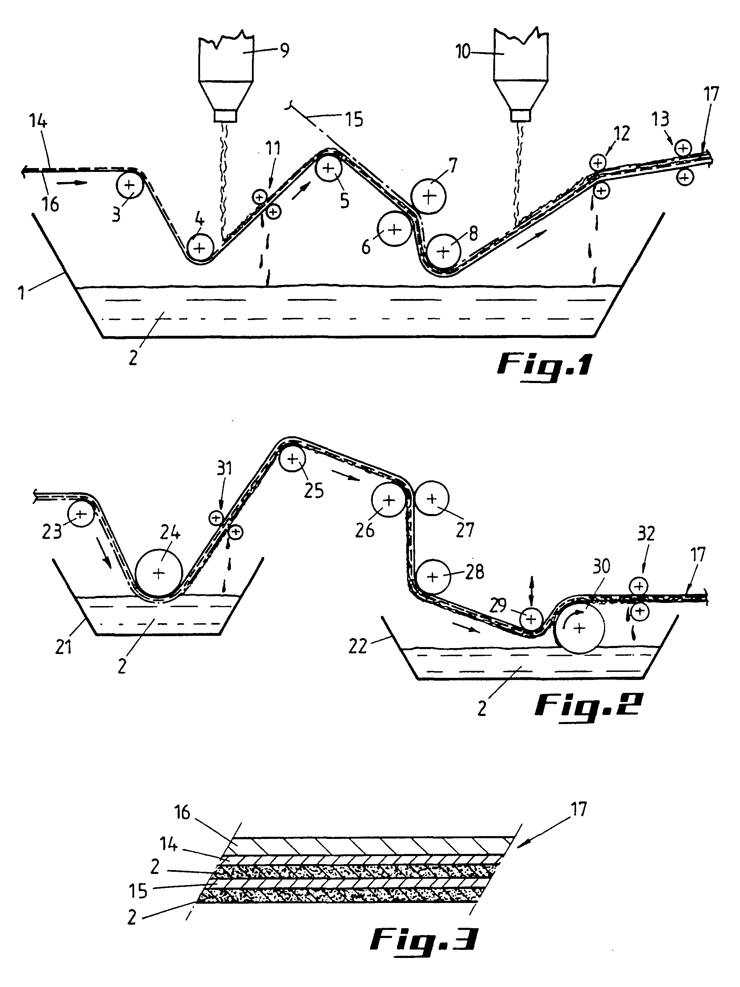

La figure 1 illustre les deuxième et troisième étapes d'un premier exemple de réalisation du procédé de fabrication d'une membrane d'étanchéité selon l'invention, suivant lequel on applique la masse bitumineuse par dessus. Un bain 1 comprend une masse bitumineuse 2, par exemple un bitume oxydé, un bitume modifié APP, SBS ou autres. Des cylindres 3 à 8 sont prévus pour assurer le déplacement du revêtement de toiture au dessus du bain 1. Une première source d'apport 9 est prévue au dessus du bain à la hauteur du cylindre 4 pour fournir la masse bitumineuse à la structure. Une deuxième source d'apport 10 est prévue au dessus du bain à la hauteur des cylindres 6 à 8 pour fournir la masse bitumineuse à la structure. Des cylindres 11 à 13 permettent de retirer la masse bitumineuse excédante.

La structure, telle qu'utilisée à la figure 1, comprend une première nappe de fibres 14 et une deuxième nappe de fibres 15. Sur l'une face de la première nappe de fibres 14, la substance 16 a été appliquée dans une première étape. Sur l'autre face de la première nappe de fibres, la masse bitumineuse est appliquée. En tant que première nappe de fibres 14, on utilise de préférence un voile de verre. Le voile de verre est tout à fait approprié en tant qu'armature d'une membrane d'étanchéité et se lie bien à la substance. La deuxième nappe de fibres 15 est de préférence formée par un non-tissé polyester, qui se lie bien à la masse bitumineuse. Suivant une autre alternative, les nappes peuvent également être formées par un complexe verre-polyester. En outre, la membrane d'étanchéité peut également comprendre une structure constituée d'une seule nappe de fibres. Enfin, la structure peut également comprendre deux nappes de fibres parmi les combinaisons suivantes : voile de verre + grille de verre, voile de verre + grille de polyester, voile de verre + non-tissé polyester, grille de verre + non-tissé polyester, fibres de verre + non-tissé polyester.

Dans la deuxième étape du procédé illustré à la figure 1, le revêtement 14, 16 est transporté à l'aide des cylindres 3 à 5 au dessus du bain 1 de façon à ce que la substance 16 est située sous la première nappe de fibres 14. Sur la première nappe de fibres 14 est appliquée une masse bitumineuse 2 à l'aide de la première source d'apport 9. Les cylindres 11 permettent de retirer la masse bitumineuse excédante qui est récupérée dans le bain 1. Suivant une alternative, le cylindre 4 est partiellement ou complètement plongée dans la masse bitumineuse 2 du bain 1. Selon cette alternative, de la masse bitumineuse 2 est appliquée des deux côtés de la structure.

Dans une troisième étape, particulière à ce mode de réalisation, la deuxième nappe de fibres 15 est conduite vers les cylindres 6 à 8 d'assemblage et est assemblée avec le revêtement 14, 16 sur lequel la masse bitumineuse a été appliquée. Ensuite, on applique encore de la masse bitumineuse à l'aide de la deuxième source d'apport 10. Les cylindres 12 et 13 permettent de racler l'excédant en masse bitumineuse et récupérer l'excédant dans le bain 1. On obtient ainsi une membrane d'étanchéité 17 selon l'invention.

La figure 2 illustre les deuxième et troisième étapes d'un deuxième exemple de réalisation du procédé de fabrication d'une membrane d'étanchéité selon l'invention, suivant lequel la masse bitumineuse est appliquée par dessous. Un premier bain 21 et un deuxième bain 22 comprennent de la masse bitumineuse 2 qui arrive au niveau des cylindres 24, respectivement 30. Ceci permet d'imprégner la masse bitumineuse sur la structure. Les cylindres 23 à 30 sont prévus pour assurer le déplacement du revêtement de toiture au dessus des premier et deuxième bains 21 et 22. Le cylindre 29 peut être déplacé en hauteur pour permettre de régler l'épaisseur de la masse bitumineuse appliquée. Les cylindres 31 et 32 ont la même fonction que les cylindres 11 à 13 de la figures 1.

Tout comme à la figure 1, la structure comprend une première nappe de fibres 14 et une deuxième nappe de fibres 15. Sur l'une face de la première nappe de fibres 14, la substance a été appliquée dans une première étape. Sur l'autre face de la première nappe de fibres, la masse bitumineuse est appliquée. Toutefois, la masse bitumineuse est appliquée par le dessous, ce qui permet d'éviter des débordements latéraux lorsqu'il y a un excédant de masse bitumineuse sur la structure.

Dans la deuxième étape du procédé illustré à la figure 2, l'ensemble formé par la première nappe de fibres 14 et la substance 16 ainsi que la deuxième nappe de fibres 15 sont transportés à l'aide des cylindres 23 à 25 au dessus du premier bain 21. La substance 16 est située au dessus de la première nappe de fibres 14. Sur la deuxième nappe de fibres 15 est imprégnée une masse bitumineuse 2 en passant par le cylindre 24. Les cylindres 31 permettent de retirer la masse bitumineuse excédante qui est récupérée dans le premier bain 21.

Dans une troisième étape suivant la figure 2, l'ensemble formé par la première nappe de fibres 14 et la substance 16 ainsi que la deuxième nappe de fibres 15, imprégnée de masse bitumineuse, sont conduits vers les cylindres 26 à 28 d'assemblage. Ensuite, on applique encore de la masse bitumineuse en passant par les cylindres 29 et 30. Les cylindres 32 permettent de racler l'excédant en masse bitumineuse et récupérer l'excédant dans le deuxième bain 22. On obtient ainsi une membrane d'étanchéité 17 selon l'invention.

La figure 3 illustre une vue en coupe à travers un membrane d'étanchéité 17 selon l'invention. Sur la première nappe de fibres 14, la substance 16 a été appliquée. La membrane comprend en plus la deuxième nappe de fibres 15 sur laquelle ladite masse bitumineuse 2 a été appliquée.

Comme illustré à la figure 3, on obtient une membrane d'étanchéité comprenant ladite substance sur la masse bitumineuse. Lorsque la membrane est exposée à des températures variables, la substance empêchera que les huiles et autres produits inflammables présents dans la masse bitumineuse puissent s'échapper de la membrane d'étanchéité par exsudation. La substance forme ainsi une barrière anti-exsudation. Cet effet de barrière est obtenue grâce au fait que la substance contient le composé à base d'acrylique ou à base d'acétate de polyvinyle qui comporte de préférence des chaînes aliphatiques assez "courtes". De par la composition de la substance, on obtient également une membrane bien souple à basse température. De plus, cette substance présente des caractéristiques de résistance au feu de par la présence de charge retardataire de flammes.

Suivant les figures 1 et 2, on applique la masse bitumineuse 2 deux fois. Suivant une alternative, on applique une seule fois la masse bitumineuse.

La membrane d'étanchéité, telle qu'illustrée à la figure 3 comprend de la masse bitumineuse 2 que d'un seul côté de la substance 16.

Le cas échéant, on utilise une nappe de fibres, sur laquelle la substance est appliquée, comme revêtement de toiture. Ce revêtement est alors appliqué sur un toit qui comprend déjà un membrane ou un autre élément d'étanchéité. Ce revêtement est appliqué sur le toit par exemple par collage.

## Revendications

1. Procédé de fabrication d'une membrane d'étanchéité (17) suivant lequel on applique, sur une face d'une structure comprenant au moins une nappe de fibres, une masse bitumineuse, **caractérisé en ce que** la masse bitumineuse est appliquée après qu'ait été appliquée sur l'autre face et en surface de ladite structure une substance (16) pâteuse ayant une viscosité à 25°C et à cisaillement nul d'au moins 10.000 Cps et qui comprend 20 à 70 % en poids humide d'un composé à base d'acrylique ou à base d'acétate de polyvinyle et une charge minérale ou organique.

2. Procédé de fabrication d'une membrane d'étanchéité suivant la revendication 1, **caractérisé en ce qu'**on utilise comme charge une charge retardataire de flamme.

3. Procédé de fabrication d'une membrane d'étanchéité suivant l'une des revendications 1 ou 2, **caractérisé par** une première étape dans laquelle ladite substance est appliquée sur une première nappe de fibres faisant partie de la structure et ensuite séchée, une deuxième étape dans laquelle ladite masse bitumineuse est appliquée sur la première nappe de fibres, et par une troisième étape dans laquelle une deuxième nappe de fibres, faisant également partie de la structure, est appliquée sur la masse bitumineuse appliquée sur la première nappe de fibres.

4. Procédé de fabrication d'une membrane d'étanchéité suivant l'une des revendications 1 ou 2, **caractérisé par** une première étape dans laquelle ladite substance est appliquée sur une première nappe de fibres faisant partie de la structure et ensuite séchée, une deuxième étape dans laquelle une deuxième nappe de fibres, faisant également partie de la structure est appliquée sur la première nappe de fibres, et par une troisième étape dans laquelle ladite masse bitumineuse est appliquée sur la deuxième nappe de fibres.

5. Procédé de fabrication d'une membrane d'étanchéité suivant la revendication 3 ou 4, **caractérisé en ce qu'**on utilise un voile de verre en tant que première nappe de fibres et un non-tissé polyester en tant que deuxième nappe de fibres.

6. Procédé de fabrication d'une membrane d'étanchéité suivant l'une des revendications 1 à 5, **caractérisé en ce que** la substance (16) pâteuse qui est appliquée comprend un coagulant, formant 1 à 20 % en poids humide et un accélérateur de coagulation, formant 2 à 5 % en poids humide.

7. Procédé de fabrication d'une membrane d'étanchéité suivant l'une des revendications 1 à 6, **caractérisé en ce que** la substance (16) pâteuse qui est appliquée comprend également un pigment formant 1 à 4 % en poids humide.

8. Procédé de fabrication d'une membrane d'étanchéité suivant l'une des revendications 1 à 7, **caractérisé en ce que** la substance (16) pâteuse qui est appliquée comprend également de l'eau, formant 1 à 4 % en poids humide et un épaississant, formant 0,2 à 0,6 % en poids humide.

9. Procédé de fabrication d'une membrane d'étanchéité suivant l'une des revendications 1 à 8, **caractérisé en ce que** la substance (16) pâteuse qui est appliquée comprend également un anti-moussant, formant 0,02 à 0,04 % en poids humide.

10. Membrane d'étanchéité comprenant une masse bitumineuse appliquée sur une face d'une structure comportant une nappe de fibres, **caractérisée en ce que** l'autre face de la structure est recouverte en surface de la structure d'une substance (16) comprenant une charge minérale ou organique ainsi que 8 à 42 %, en poids sec d'un latex polyacrylique ou d'un latex copolymère de styrène acrylique.

11. Membrane d'étanchéité suivant la revendication 10, **caractérisée en ce que** ledit latex comporte des chaînes latérales aliphatiques de longueur inférieure à 10 atomes de carbone.

12. Revêtement souple destiné à une toiture recouverte d'une masse bitumineuse, lequel revêtement comprend une structure qui comporte au moins une nappe de fibres, **caractérisé en ce que** la structure est recouverte en surface d'une substance, comprenant une charge minérale ou organique ainsi que 8 à 42% en poids sec, d'un latex polyacrylique ou d'un latex copolymère de styrène acrylique comportant des chaînes aliphatiques de longueur inférieure à 10 atomes de carbone.

13. Utilisation, en tant que revêtement de toiture sur une masse bitumineuse, d'une nappe de fibres, sur laquelle est appliquée une substance comprenant une charge minérale ou organique ainsi que 8 à 42%, en poids sec d'un latex polyacrylique ou d'un latex copolymère de styrène acrylique, la substance se trouvant en surface de la structure du côté opposé au côté en contact avec la masse bitumineuse.

## Patentansprüche

1. Verfahren zur Herstellung einer Dichtungsbahn (17), bei dem auf eine Seite ihrer Struktur, die zumindest eine Lage aus Fasern umfasst, eine bituminöse Masse aufgetragen wird, **dadurch gekennzeichnet, dass** die bituminöse Masse aufgetragen wird, nachdem auf die Oberfläche der anderen Seite der Struktur eine pastenartige Substanz (16) aufgetragen worden ist, die eine Viskosität von mindestens 10.000 Cps bei 25°C und bei einer Scherkraft von null aufweist, und die zu 20 bis 70 % des Nassgewichtes eine Verbindung auf der Basis von Acryl oder auf der Basis von Polyvinylacetat und einen mineralischen oder organischen Zusatzstoff enthält.

2. Verfahren zur Herstellung einer Dichtungsbahn (17) nach Anspruch 1, **dadurch gekennzeichnet, dass** als Zusatzstoff ein flammhemmender Zusatzstoff eingesetzt wird.

3. Verfahren zur Herstellung einer Dichtungsbahn (17) nach einem der Ansprüche 1 oder 2, **gekennzeichnet durch** einen ersten Schritt, bei dem die Substanz auf eine erste Lage aus Fasern, die Teil der Struktur wird, aufgetragen und anschließend getrocknet wird, einen zweiten Schritt, bei dem die bituminöse Masse auf die erste Lage aus Fasern aufgetragen wird, und einen dritten Schritt, bei dem eine zweite Lage aus Fasern, die ebenfalls Teil der Struktur wird, auf die bituminöse Masse, die auf die ersten Lage aus Fasern aufgetragen worden ist, aufgetragen wird.

4. Verfahren zur Herstellung einer Dichtungsbahn (17) nach einem der Ansprüche 1 oder 2, **gekennzeichnet durch** einen ersten Schritt, bei dem die Substanz auf eine erste Lage aus Fasern, die Teil der Struktur wird, aufgetragen und anschließend getrocknet wird, einen zweiten Schritt, bei dem eine zweite Lage aus Fasern, die ebenfalls Teil der Struktur wird, auf die erste Lage aus Fasern aufgelegt wird, und einen dritten Schritt, bei dem die bituminöse Masse auf die zweite Lage aus Fasern aufgetragen wird.

5. Verfahren zur Herstellung einer Dichtungsbann (17) nach einem der Ansprüche 3 oder 4, **dadurch gekennzeichnet, dass** ein Vlies aus Glasfasern als erste Lage aus Fasern und ein Vlies (Nonwoven) aus Polyesterfasern als zweite Lage aus Fasern eingesetzt wird.

6. Verfahren zur Herstellung einer Dichtungsbahn (17) nach einem der Ansprüche 1 bis 5, **dadurch gekennzeichnet, dass** die pastenartige Substanz (16), die aufgetragen worden ist, ein einen Anteil von 1 bis 20 % des Nassgewichtes bildendes koagulierendes Mittel und einen einen Anteil von 2 bis 5 % des Nassgewichtes bildenden Koagulationsbeschleuniger enthält.

7. Verfahren zur Herstellung einer Dichtungsbahn (17) nach einem der Ansprüche 1 bis 6, **dadurch gekennzeichnet, dass** die pastenartige Substanz (16), die aufgetragen worden ist, ebenfalls ein einen Anteil von 1 bis 4 % des Nassgewichtes bildendes Pigment enthält.

8. Verfahren zur Herstellung einer Dichtungsbahn (17) nach einem der Ansprüche 1 bis 7, **dadurch gekennzeichnet, dass** die pastenartige Substanz (16), die aufgetragen worden ist, ebenfalls einen Anteil von 1 bis 4 % des Nassgewichtes bildendes Wasser und ein einen Anteil von 0,2 bis 0,6 % des Nassgewichtes bildenden Verdickungsmittel enthält.

9. Verfahren zur Herstellung einer Dichtungsbahn (17) nach einem der Ansprüche 1 bis 8, **dadurch gekennzeichnet, dass** die pastenartige Substanz (16), die aufgetragen worden ist, ebenfalls ein einen Anteil von 0,02 bis 0,04 % des Nassgewichtes bildendes Antischaummittel enthält.

10. Dichtungsbahn (17) mit einer auf einer Seite ihrer Struktur, die zumindest eine Lage aus Fasern umfasst, aufgetragenen bituminöse Masse, **dadurch gekennzeichnet, dass** auf der anderen Seite der Struktur die Oberfläche der Struktur durch eine pastenartige Substanz (16) bedeckt ist, die einen mineralischen oder organischen Zusatzstoff sowie zu 8 bis 42 % des Trockengewichtes einen Latex aus Polyacryl oder einen Copolymer-Latex aus Styrol-Acryl enthält.

11. Dichtungsbahn (17) nach Anspruch 10, **dadurch gekennzeichnet, dass** der Latex aliphatische Nebenketten mit einer Länge kleiner als 10 Kohlenstoffatome aufweist.

12. Biegsamer Belag zur Abdeckung eines Daches mit einer bituminösen Masse, wobei der Belag eine Struktur mit mindestens einer Lage aus Fasern aufweist, **dadurch gekennzeichnet, dass** die Struktur auf ihrer Oberfläche durch eine Substanz bedeckt ist, die einen mineralischen oder organischen Zusatzstoff sowie zu 8 bis 42 % des Trockengewichtes einen Latex aus Polyacryl oder einen Copolymer-Latex aus Styrol-Acryl enthält, wobei der Latex aliphatische Nebenketten mit einer Länge kleiner als 10 Kohlenstoffatome aufweist.

13. Verwendung einer Lage aus Fasern, auf die eine Substanz aufgetragen worden ist, die einen mineralischen oder organischen Zusatzstoff sowie zu 8 bis 42 % des Trockengewichtes einen Latex aus Polyacryl oder einen Copolymer-Latex aus Styrol-Acryl enthält, als Dachbelag auf einer bituminösen Masse, wobei sich die Substanz auf der Oberfläche der Struktur gegenüber der Seite, die mit der bituminösen Masse in Kontakt ist, befindet.

## Claims

1. Method of manufacturing an impermeable membrane (17) according to which a bituminous mass is applied to one face of a structure comprising at least one layer of fibres, **characterised in that** the bituminous mass is applied after there has been applied to the other face and on the surface of the said structure a viscous substance (16) with a viscosity at 25°C and zero shearing of at least 10,000 Cps and which comprises 20% to 70% by wet weight of a compound based on acrylic or based on polyvinyl acetate and a mineral or organic filler.

2. Method of manufacturing an impermeable membrane according to Claim 1, **characterised in that** a flame retardant filler is used as a filler.

3. Method of manufacturing an impermeable membrane according to one of Claims 1 or 2, **characterised by** a first step in which the said substance is applied to a first layer of fibres forming part of the structure and then dried, a second step in which the said bituminous mass is applied to the first layer of fibres, and a third step in which a second layer of fibres, also forming part of the structure, is applied to the bituminous mass applied to the first layer of fibres.

4. Method of manufacturing an impermeable membrane according to one of Claims 1 or 2, **characterised by** a first step in which the said substance is applied to a first layer of fibres forming part of the structure and then dried, a second step in which a second layer of fibres, also forming part of the structure, is applied to the first layer of fibres, and by a third step in which the said bituminous mass is applied to the second layer of fibres.

5. Method of manufacturing an impermeable membrane according to Claim 3 or 4, **characterised in that** a glass fabric is used as a first layer of fibres and a non-woven polyester cloth as a second layer of fibres.

6. Method of manufacturing an impermeable membrane according to one of Claims 1 to 5, **characterised in that** the viscous substance (16) which is applied comprises a coagulant, forming 1% to 20% by wet weight, and a coagulation accelerator, forming 2% to 5% by wet weight.

7. Method of manufacturing an impermeable membrane according to one of Claims 1 to 6, **characterised in that** the viscous substance (16) which is applied also comprises a pigment forming 1% to 4% by wet weight.

8. Method of manufacturing an impermeable membrane according to one of Claims 1 to 7, **characterised in that** the viscous substance (16) which is applied also comprises water, forming 1% to 4% by wet weight, and a thickener, forming 0.2% to 0.6% by wet weight.

9. Method of manufacturing an impermeable membrane according to one of Claims 1 to 8, **characterised in that** the viscous substance (16) which is applied also comprises an anti-foaming agent, forming 0.02% to 0.04% by wet weight.

10. Impermeable membrane comprising a bituminous mass applied to one face of a structure incorporating a layer of fibres, **characterised in that** the other face of the structure is covered on the surface of the structure with a substance (16) comprising a mineral or organic filler and 8% to 42% by dry weight of a polyacrylic latex or a copolymer latex of acrylic styrene.

11. Impermeable membrane according to Claim 10, **characterised in that** the said latex has lateral aliphatic chains with a length less than 10 carbon atoms.

12. Flexible covering intended for a roof covered with a bituminous mass, the said covering comprising a structure which includes at least one layer of fibres, **characterised in that** the structure is covered on the surface with a substance, comprising a mineral or organic filler as well as 8% to 42% by dry weight of a polyacrylic latex or a copolymer latex of acrylic styrene having aliphatic chains with a length less than 10 carbon atoms.

13. Use, as a roof covering on a bituminous mass, of a layer of fibres, to which there is applied a substance comprising a mineral or organic filler as well as 8% to 42% by dry weight of a polyacrylic latex or a copolymer latex of acrylic styrene, the substance being situated on the surface of the structure on the side opposite to the side in contact with the bituminous mass.
